# EUROPÄISCHE PATENTSCHRIFT

(11) **EP 0 425 992 B1**
(45) Veröffentlichungstag und Bekanntmachung des Hinweises auf die Patenterteilung: **28.12.1994**
(21) Anmeldenummer: 90120352.1
(22) Anmeldetag: 24.10.1990
(51) Int. Cl.: C08J 9/20

(54) **Verfahren zur Herstellung von expandierbaren Styrolpolymerisaten**
Process for producing expandable styrene polymerizates
Procédé de préparation de polymères de styrène expansibles

(30) Priorität: 03.11.1989 DE 3936595
(43) Veröffentlichungstag der Anmeldung: 08.05.1991
(73) Patentinhaber: BASF Aktiengesellschaft, 67063 Ludwigshafen (DE)
(72) Erfinder: Hintz, Hans, Dr., W-6700 Ludwigshafen (DE); Guhr, Uwe, Dr., W-6718 Grünstadt (DE); Hahn, Klaus, Dr., W-6719 Kirchheim (DE)

(56) Entgegenhaltungen:
- DE-A- 2 548 524
- US-A- 3 635 868

## Beschreibung

Die Erfindung betrifft ein Verfahren zur Herstellung expandierbarer Styrolpolymerisate, bei dem die Schaumbildung bei der Herstellung vermindert und der Innenwassergehalt der Styrolpolymerisate erhöht wird.

Es ist bekannt, vgl. DE-A-25 48 524, bei der Herstellung expandierbarer Styrolpolymerisate durch Suspensionspolymerisation in Gegenwart von Poly-N-vinylpyrrolidon zu arbeiten. Das dazu verwendete Poly-N-Vinylpyrrolidon besitzt üblicherweise einen K-Wert von maximal 90. Nachteilig bei diesem Verfahren ist es, daß der Polymerisationsansatz zur Schaumbildung neigt und daß daher das Kesselvolumen nicht voll ausgenutzt werden kann und die vollständige Kesselentleerung Schwierigkeiten bereitet.

Der Erfindung lag die Aufgabe zugrunde, die Schaumbildung bei der Polymerisation zu vermindern. Ferner bestand die Aufgabe, den Anteil an organischen Substanzen im Abwasser des Polymerisationsansatzes zu verringern. Es wurde außerdem angestrebt, den Innenwassergehalt der expandierbaren Styrolpolymerisate zu erhöhen.

überraschenderweise wurde nun gefunden, daß diese Aufgaben sämtlich gelöst werden durch Verwendung eines besonders hochmolekularen Poly-N-vinylpyrrolidon.

Gegenstand der Erfindung ist somit ein Verfahren zur Herstellung von expandierbaren Styrolpolymerisaten durch Polymerisation von Styrol, gegebenenfalls zusammen mit bis zu 50 Gew.-% anderer α,β-olefinisch ungesättigter Verbindungen in wäßriger Suspension in Gegenwart von Poly-N-vinylpyrrolidon als Schutzkolloid und Zusatz eines C₅- bis C₆-Kohlenwasserstoffs als Treibmittel und gegebenenfalls üblicher Zusatzstoffe in wirksamen Mengen vor, während oder nach der Polymerisation, das dadurch gekennzeichnet ist, daß die wäßrige Phase 0,05 bis 0,3 Gew.-% Poly-N-vinypyrrolidon vom K-Wert 100 bis 150 enthält.

Hinsichtlich der Ausgangsmonomeren, der Treibmittel und Zusatzstoffe und der Verfahrensführung unterscheidet sich das neue Verfahren nicht von den bekannten Herstellungsverfahren.

Styrolpolymerisate im Sinn der Erfindung sind Polystyrol und Mischpolymerisate des Styrols mit anderen α,β-olefinisch ungesättigten Verbindungen, die mindestens 50 Gewichtsteile Styrol einpolymerisiert erhalten. Als Comonomere kommen z.B. in Frage α-Methylstyrol, kernhalogenierte Styrole, kernalkylierte Styrole, Acrylnitril, Ester der Acryl- oder Methacrylsäure von Alkoholen mit 1 bis 8 C-Atomen, N-Vinylverbindungen, wie Vinylcarbazol, Maleinsäureanhydrid oder auch geringe Mengen an Verbindungen, die zwei polymerisierbare Doppelbindungen enthalten, wie Butadien, Divinylbenzol oder Butandioldiacrylat.

Als Treibmittel enthalten die Formmassen 1 bis 10 Gew.-%, vorzugsweise 3 bis 8 Gew.-%, eines C₃- bis C₆-Kohlenwasserstoffs, wie Propan, Butan, Isobutan, n-Pentan, i-Pentan, Neopentan und/oder Hexan. Vorzugsweise wird ein handelsübliches Pentan-Gemisch verwendet.

Die Styrolpolymerisate können auch übliche Zusätze an anderen Stoffen enthalten, die den expandierbaren Produkten bestimmte Eigenschaften verleihen. Genannt seien beispielsweise Flammschutzmittel auf Basis von organischen Brom- oder Chlorverbindungen, die auch in Form von Mikrokapseln mit einer styrolunlöslichen Beschichtung vorliegen können, wie Trisdibrompropylphosphat, Hexabromcyclododecan, Chlorparaffin, sowie Synergisten für Flammschutzmittel, wie Dicumyl und hochzersetzliche organische Peroxide; ferner Antistatika, Stabilisatoren, Farbstoffe, Schmiermittel, Füllstoffe und beim Vorschäumen antiverklebend wirkende Stoffe, wie Zinkstearat, Melaminformaldehydkondensate oder Kieselsäure, sowie Mittel zur Verkürzung der Entformzeit beim Ausschäumen, wie z.B. Glycerinester oder Hydroxycarbonsäureester. Die Zusatzstoffe können je nach der beabsichtigten Wirkung in den Teilchen homogen verteilt oder als Oberflächenbeschichtung vorliegen.

Die Suspensionspolymerisation von Styrol ist an sich bekannt. Sie ist ausführlich beschrieben im Kunststoff-Handbuch, Band V, "Polystyrol", Carl Hanser-Verlag, Seiten 679 bis 688. Dabei wird im allgemeinen Styrol, ggf. zusammen mit den oben genannten Comonomeren, in Wasser suspendiert, wobei übliche organische oder anorganische Suspensionsstabilisatoren, vorzugsweise Poly-N-vinylpyrrolidon zugesetzt werden.

Die erfindungsgemäßen Styrolpolymerisate werden hergestellt durch Polymerisation von Styrol, ggf. zusammen mit bis zu 50 Gew.-% der oben genannten Comonomeren, in wäßriger Suspension, wobei vor, während oder nach der Polymeristion die oben beschriebenen Treibmittel und gegebenenfalls übliche Zusatzstoffe in wirksamen Mengen zugesetzt werden.

Man kann die Polymerisation auch, wie in der EP-B 106 129 und in der DE-A 39 21 148 beschrieben, in Gegenwart einer geringen Menge eines üblichen Kettenüberträgers ausführen, der das Molekulargewicht regelt. Vorzugsweise wird als Regler tert.-Dodecylmercaptan verwendet.

Styrolpolymerisate, die 0,1 bis 2 Gew.-%, vorzugsweise 0,15 bis 1,5 Gew.-%, einpolymerisiertes Acrylnitril enthalten, führen zu Schaumstoffen, die sich durch weitgehende Schrumpffreiheit auszeichnen. Auch ein Gemisch aus 95 bis 99,5 Gew.-% Polystyrol und 0,5 bis 5 Gew.-% eines styrollöslichen Styrol-Acrylnitril-Copolymeren zeigt diese Eigenschaften, wenn der Gesamtgehalt an Acrylnitril im Gemisch 0,1 bis 2 Gew.-%, vorzugsweise 0,15 bis 2 Gew.-% beträgt.

Styrolpolymerisate, die 3 bis 20 Gew.-%, vorzugsweise 5 bis 15 Gew.-% einpolymerisierbares Acrylnitril enthalten, führen zu Schaumstoffen mit hoher Ölbeständigkeit. Auch ein Gemisch aus 50 bis 85 Gew.-% Polystyrol und 15 bis 50 Gew.-% eines styrollöslichen Styrol-Acrylnitril-Copolymeren zeigt diese vorteilhafte Eigenschaft, wenn der Gesamtgehalt an Acrylnitril im Gemisch 3 bis 20 Gew.-%, vorzugsweise 5 bis 15 Gew.-%, beträgt. Die Herstellung derartiger Mischungen erfolgt auf einfache Weise dadurch, daß man vor der Polymerisation die vorgesehene Menge des Styrol-Acrylnitril-Copolymeren in Styrol löst.

Styrolpolymerisate, die 2 bis 15 Gew.-%, insbesondere 3 bis 12 Gew.-%, Maleinsäure(anhydrid) als Comonomeres enthalten, führen zu Schaumstoffen, die sich durch hohe Wärmeformbeständigkeit auszeichnen. Vorteilhaft geht man dabei von einem Gemisch aus Polystyrol und einem handelsüblichen Styrol-Maleinsäureanhydrid-Copolymeren in Styrol und anschließende Polymerisation leicht hergestellt werden kann.

Als Zusatzstoffe sind auch Poly-(2,6-dimethyl)-1,4-phenylenether und Poly-1,4-phenylensulfid geeignet. In Mengen von 1 bis 20 Gew.-%, bezogen auf die Komponente a) bewirken diese Zusätze eine Erhöhung der Wärmeformbeständigkeit des Schaumstoffs.

Als Zusatzstoffe sind gemäß der Lehre der deutschen Offenlegungsschrift 39 15 602 auch styrollösliche Elastomere geeignet. Diese Zusätze erhöhen die Elastizität des Schaumstoffs.

Erfindungswesentlich ist es, die Suspensionspolymerisation in Gegenwart von Poly-N-vinylpyrrolidon mit besonders hohem Molekulargewicht als Suspensionsstabilisator (Schutzkolloid) vorzunehmen. Die wäßrige Phase des Polymerisationsansatzes soll 0,05 bis 0,3 Gew.-%, vorzugsweise 0,1 bis 0,3 Gew.-%, insbesondere 0,15 bis 0,25 Gew.-% Poly-N-vinylpyrrolidon mit einem K-Wert (nach Fikentscher, vgl. DIN 53 726) von 100 bis 150, vorzugsweise 100 bis 130, insbesondere 105 bis 120 enthalten.

Die Herstellung des Poly-N-vinylpyrrolidon erfolgt im allgemeinen in an sich bekannter Weise durch Polymerisation von N-Vinylpyrrolidon in wäßriger Lösung bei erhöhter Temperatur unter Verwendung von üblichen Radikalbildnern als Katalysator (vgl. EP-B 104 042). Zur Erzielung hoher K-Werte hat sich die Verwendung von tert.-Butyl-peroxi-2-ethylhexanoat oder tert.-Butylperoxi-3,5,5-trimethylhexanoat bewährt.

Der Ansatz wird nach Zugabe des Katalysators im allgemeinen langsam, d.h. etwa innerhalb von 1 bis 3 Stunden auf eine Temperatur von 80 bis 100°C erhitzt und 2 bis 6 Stunden bei dieser Temperatur gehalten, bis der Restmonomerengehalt weniger als 1 %, vorzugsweise weniger als 0,2 %, insbesondere weniger als als 0,1 % beträgt.

Die in den Beispielen genannten Teile sind Gewichtsteile.

### Beispiel 1

### Herstellung von Poly-N-vinylpyrrolidon (K-Wert 105)

In einen Rührkessel gibt man 6400 Teile Wasser, 1600 Teile N-Vinylpyrrolidon und 1,6 Teile tert.-Butyl-peroxi-2-ethylhexanoat. Nach Inertisierung mit Stickstoff erwärmt man innerhalb von 1 Stunde auf 50°C, anschließend wird die Temperatur geregelt innerhalb von 6 Stunden auf 85°C angehoben und anschließend 2 Stunden bei 85°C gehalten.

Das Polymere hat einen K-wert von 105, der Restmonomerengehalt beträgt 0,02 %, bezogen auf das Polymere.

### Beispiel 2

### Herstellung von Poly-N-vinylpyrrolidon (K-Wert 114)

Man arbeitet wie in Beispiel 1, verwendet jedoch nur 4 Teile tert.-Butyl-peroxi-ethylhexanoat.

Das Polymere hat einen K-Wert von 114, der Restmonomerengehalt beträgt 0,2 %.

### Beispiel 3

In einem druckfesten Rührkessel wird eine Mischung von 200 Teilen Wasser, 0,1 Teilen Natriumpyrophosphat, 0,1 Teilen Magnesiumsulfat, 205 Teilen Styrol, 14 Teilen Pentan, 0,5 Teilen tert.-Butylperbenzoat, 0,25 Teilen Dibenzoylperoxid, 1,4 Teilen Hexabromcyclododecan und 4 Teilen einer 10 %igen wäßrigen Lösung von Polyvinylpyrrolidon (K-Wert 105), hergestellt nach Beispiel 1, unter Rühren in Stickstoff-Atmosphäre auf 90°C, anschließend innerhalb 5 Stunden auf 120°C erhitzt und 5 Stunden bei 120°C gehalten. Die Suspension hat nach dem Abkühlen sehr wenig Schaumbildung, was insbesondere die Entleerung der Rührkessel erleichtert.

Ein Vergleichsansatz mit Polyvinylpyrrolidon (K-Wert 90), zeigt eine starke Schaumbildung in der Suspension nach der Polymerisation, so daß die Rührkesselentleerung sehr erschwert wird.

### Beispiel 4

Es wurde wie in Beispiel 4 gearbeitet, jedoch eine reduzierte Menge von 3 Teilen einer 10 %igen Lösung von Polyvinylpyrrolidon (K-Wert 105), hergestellt nach Beispiel 1, als Schutzkolloid verwendet.

Die Suspension hat nach dem Abkühlen sehr wenig Schaumbildung, was insbesondere die Entleerung der Rührkessel erleichtert. Die erhaltenen Perlpolymerisate mit einem mittleren Teilchendurchmesser von ca. 1 mm sind rund und ohne Deformationen.

Ein Vergleichsansatz mit Polyvinylpyrrolidon vom K-Wert 90 zeigt auch bei der reduzierten Menge von 3 Teilen einer 10 %igen wäßrigen Lösung eine starke Schaumbildung in der Suspension nach der Polymerisation, so daß die Rührkesselentleerung sehr erschwert wird. Die erhaltenen Perlpolymerisate mit einem mittleren Teilchendurchmesser von ca. 1 mm sind z.T. deformiert, was eine beginnende ungenügende Schutzkolloid-Wirkung anzeigt.

### Beispiel 5

Es wurde wie in Beispiel 3 gearbeitet, jedoch eine Menge von 4 Teilen einer 10 %igen Lösung von Polyvinylpyrrolidon (K-Wert 114), hergestellt nach Beispiel 2, als Schutzkolloid verwendet.

Die Suspension hat nach dem Abkühlen sehr wenig Schaumbildung, was insbesondere die Entleerung der Rührkessel erleichtert. Die erhaltenen Perlpolymerisate mit einem mittleren Teilchendurchmesser von ca. 1 mm haben einen erhöhten Innenwassergehalt von ca. 2 %.

Ein Vergleichsansatz mit Polyvinylpyrrolidon vom K-Wert 90 zeigt eine starke Schaumbildung in der Suspension nach der Polymerisation, so daß die Rührkesselentleerung sehr erschwert wird. Die erhaltenen Perlpolymerisate mit einem mittleren Teilchendurchmesser von ca. 1 mm haben einen üblichen Innenwassergehalt von ca. 1 %.

## Patentansprüche

1. Verfahren zur Herstellung von expandierbaren Styrolpolymerisaten durch Polymerisation von Styrol, gegebenenfalls zusammen mit bis zu 50 Gew.-% anderer α,β-olefinisch ungesättigter Verbindungen in wäßriger Suspension in Gegenwart von Poly-N-vinylpyrrolidon als Schutzkolloid und Zusatz eines C₅- bis C₆-Kohlenwasserstoffs als Treibmittel und gegebenenfalls üblicher Zusatzstoffe in wirksamen Mengen vor, während oder nach der Polymerisation, dadurch gekennzeichnet, daß die wäßrige Phase 0,05 bis 0,3 Gew.-% Poly-N-vinylpyrrolidon mit einem K-Wert nach Fikentscher, DIN 53 726, von 100 bis 150 enthält.

## Claims

1. A process for the preparation of an expandable styrene polymer by polymerizing styrene, if desired together with up to 50% by weight of other α,β-olefinically unsaturated compounds, in aqueous suspension in the presence of poly-N-vinylpyrrolidone as protective colloid and with addition of a C₃-C₆-hydrocarbon as blowing agent and, if desired, conventional additives in effective amounts before, during or after the polymerization, wherein the aqueous phase contains from 0.05 to 0.3% by weight of poly-N-vinylpyrrolidone having a K value according to Fikentscher, DIN 53 726, of from 100 to 150.

## Revendications

1. Procédé de fabrication de polymères du styrène, expansés par la polymérisation du styrène, éventuellement en même temps que jusqu'à 50% en poids d'autres composés α,β-oléfiniquement insaturés, en solution aqueuse et en présence de poly-N-vinylpyrrolidone servant de colloïde protecteur et sous addition d'un hydrocarbure en C₅ à C₆ servant d'agent porogène et éventuellement d'additifs habituels en proportions actives, avant, pendant ou après la polymérisation, caractérisé en ce que la phase aqueuse contient de 0,05 à 0,3% en poids de poly-N-vinylpyrrolidone d'une valeur K selon Fikentscher, DIN 53 726, de 100 à 150.
